# EUROPEAN PATENT SPECIFICATION

(11) **EP 2 753 120 B1**
(45) Date of publication and mention of the grant of the patent: **31.05.2017**
(21) Application number: 12786696.0
(22) Date of filing: 12.04.2012
(51) Int. Cl.: H04W 36/00, H04L 12/66, H04W 40/24, H04W 36/30, H04W 40/12, H04W 48/18, H04W 28/08, H04W 88/06, H04L 12/801

(54) **MULTI-MODE INTELLIGENT ACCESS METHOD, DEVICE AND SYSTEM**
INTELLIGENTES MULTIMODALES ZUGRIFFSVERFAHREN SOWIE VORRICHTUNG UND SYSTEM DAFÜR
PROCÉDÉ, DISPOSITIF ET SYSTÈME D'ACCÈS INTELLIGENT MULTI-MODE

(30) Priority: 02.09.2011 CN 201110258912
(43) Date of publication of application: 09.07.2014
(73) Proprietor: ZTE Corporation, Shenzhen, Guangdong 518057 (CN)
(72) Inventor: ZHU, Jinguo, Shenzhen Guangdong 518057 (CN); LIU, Jianye, Shenzhen Guangdong 518057 (CN); ZHAO, Youchun, Shenzhen Guangdong 518057 (CN); WANG, Weibin, Shenzhen Guangdong 518057 (CN); WU, Se, Shenzhen Guangdong 518057 (CN); YOU, Shilin, Shenzhen Guangdong 518057 (CN); WANG, Quan, Shenzhen Guangdong 518057 (CN)
(74) Representative: Protector IP Consultants AS
(86) International application number: PCT/CN2012/073959
(87) International publication number: WO 2012/155728

(56) References cited:
- CN-A- 1 992 958
- CN-A- 101 198 128
- CN-A- 101 772 102
- RUSSELL PAUL L: "Addressing Unique M2M Challenges with Converged Gateways", ETSI TC M2M WORKSHOP , 19 - 20 OCTOBER 2010, SOPHIA ANTIPOLIS, FRANCE, INTERDIGITAL INC , 19 October 2010 (2010-10-19), pages 1-10, XP002624007, Retrieved from the Internet: URL:http://docbox.etsi.org/Workshop/2010/2 01010_M2MWORKSHOP/04_M2MArchitectureAspect s/RUSSEL_InterDigital_M2M_Challenges.pdf [retrieved on 2011-02-21]
- Anonymous: "Machine-to-Machine Services", , 2 March 2011 (2011-03-02), pages 1-18, XP055190841, Retrieved from the Internet: URL:http://www.m2mnow.biz/wp-content/uploa ds/2011/06/Tekelec_M2M_WP_Mar11.pdf [retrieved on 2015-05-21]
- "Machine- to- Machine communications (M2M); Functional architecture", ETSI DRAFT; TS 102690 V 0-6-2 REV MARKS, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.6.2, 30 August 2010 (2010-08-30), pages 1-116, XP014050889, [retrieved on 2010-08-30]

## Description

### TECHNICAL FIELD

The disclosure relates to the field of communications, and particularly to a multi-mode intelligent access method, device and system.

### BACKGROUND

With the development of wireless communication technologies, there are multiple wireless technologies at present, such as a Global System for Mobile Communications (GSM) network and a General Packet Radio Service (GPRS) network defined by a European standard group 3rd Generation Partnership Project (3GPP) in second generation (2G) times, a Universal Mobile Telecommunications System (UMTS) network defined by the 3GPP in 3rd generation (3G) times and an Evolved Packet System (EPS) network defined by the 3GPP in fourth generation (4G) times; a Code Division Multiple Access (CDMA) network defined by an American standard group 3GPP2; a Worldwide Interoperability for Microwave Access (Wimax) network defined by a Wimax forum; and a Wireless Local Area Network (WLAN) defined by the Institute of Electrical and Electronic Engineers (IEEE). For different access networks, the applicable scopes thereof are different. For example, the WLAN, which is an extension of a fixed network, is applicable for indoor use while the GSM, GPRS, CDMA, EPC and Wimax networks are applicable for wide coverage. Currently, there are also multiple wireless communication technologies with a low price, a low transmission rate and a low power and being applicable for a short distance in the industry, which include Bluetooth technology, Infrared Ray (IR) technology and Zigbee technology. These technologies are mainly applied to industrial control, domestic automatic control, toy manufacturers, sensor networks and the like.

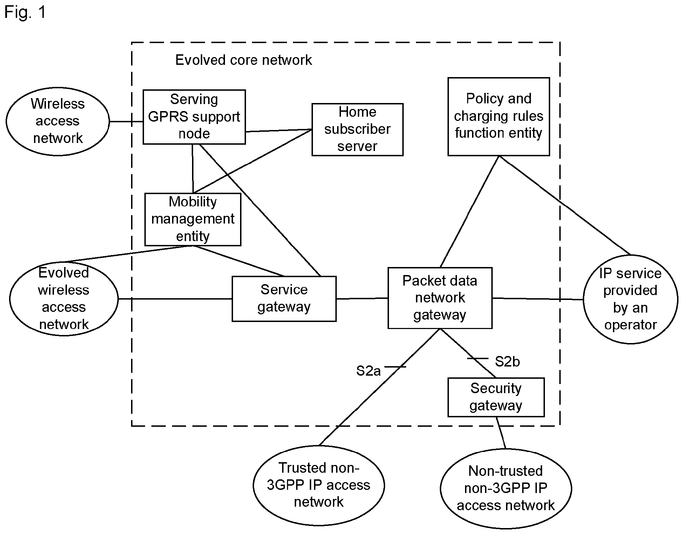

The 3GPP defines the EPS network in the 4G times, and also defines an Evolved Packet Core (EPC) network when defining a new generation of Evolved Universal Terrestrial Radio Access Network (E-UTRAN) network. The outstanding characteristic of the EPC is to integrate multiple network access modes to the greatest extent. The architecture of the EPC network is as shown in Fig. 1, which includes the following important network elements:
a Mobility Management Entity (MME), which is a control plane entity, i.e., a server for temporarily storing subscriber data, and is responsible for managing and storing contexts of a terminal (such as a terminal/subscriber identifier, a state of mobility management, a subscriber security parameter) and authenticating subscribers;
a Serving GPRS Support Node (SGSN), which is a service support point for a traditional 3GPP wireless access network to access an EPC network, is similar to the MME functionally, and is responsible for location updating, paging management, bearer management, authentication and other functions of a subscriber;
a Home Subscriber Server (HSS), which is mainly used for storing subscription information and current registering location information of subscribers to facilitate finding the subscribers, and storing security keys of the subscribers to support authentication of the subscribers when accessing the HSS;
a Serving Gateway (S-GW), serving as an anchor being mainly responsible for mobility management in a 3GPP access network, which may trigger paging of the MME and the SGSN after receiving downlink data in an idle state;
a Packet Data Network Gateway (P-GW or PDN GW), which is a user plane entity, and is responsible for routing data for the user plane, assigning an Internet Protocol (IP) address for a subscriber, and accessing an operator's network; and the P-GW provides multiple kinds of interfaces to allow a terminal to access the P-GW via multiple kinds of access networks; and
a Policy and Charging Rules Function (PCRF) entity, which is mainly configured to provide charging and Quality of Service (QoS) control policies according to service information and subscription information of subscribers, be connected with the P-GW via an interface, and send the charging and QoS control policies to the P-GW for implementing them therein.

The EPC network supports intercommunication between the EPC network and a non-3GPP network. The non-3GPP system includes access networks such as a WLAN, a CDMA network and a WiMAX network. For a trusted non-3GPP IP access network of an operator, it can access the P-GW directly via an S2a interface; and for a non-trusted non-3GPP IP access network of an operator, it can access the P-GW through a security gateway via an S2b interface.

To sum up, operators may deploy multiple kinds of wireless technologies at present. However, the multiple kinds of wireless technologies are completely independent of each other, and there is no intelligent management and dispatching among the multiple kinds of wireless technologies, so that the advantage of bandwidth fails to give full play and a subscriber cannot select an appropriate access network according to a wireless load, an application type and other information. Moreover, most of existing terminals fail also to support multi-mode transmission. In addition, there is a high cost for common terminals to support multi-mode transmission and it is not suitable for use on a large scale.

RUSSELL PAULL: "Addressing Unique M2M Challenges with Converged Gateways", ETSI TC M2M WORKSHOP, 19-20 October 2010 discloses a converged gateway (CGW), the gateway will allow selection of the optimum access network for communication to a network application. Bandwidth aggregation: simultaneous distribution of application flow over multiple network connections.

Anonymous: "Machine-to-Machine Services", 2 March 2011, XP055190841 discloses that the ultimate success of the PCRF in ensuring operators can manage the performance of their networks at the required levels of granularity and optimize them for M2M services depends on establishing a feedback loop. The continuous feedback loop performs three actions: analyse, decide and act. Wherein Decide where and how to handle traffic by using real-time data from the network and device information from the SDM system. Equipped with this context-aware information, operators can enhance the intelligence of their networks, making them device-aware as well as radio access network (RAN)-aware. With a sophisticated PCRF, operators can adjust policies, apply business rules and optimize traffic through routing and load balancing to improve network performance.

"Machine-to-Machine communications (M2M); Functional architecture", ETSI DRAFT; TS 102690 V 0-6-2 REV MARKS discloses that M2M Devices maybe connected to the Network Domain via multiple (sequential or parallel) M2M Gateways. M2M Area Network: provides connectivity between M2M Devices and M2M Gateway.

### SUMMARY

In view of this, the disclosure is intended to provide a multi-mode intelligent access method, a multi-mode intelligent access device and a multi-mode intelligent access system, so as to optimize wireless bandwidths and implement flow mobility between multiple kinds of access networks.

The features of the method, the device and the system according to the present invention are defined in the independent claims, and the preferable features according to the present invention are defined in the dependent claims.

By means of the multi-mode intelligent access technology of the disclosure, a terminal can use multiple kinds of access networks at the same time, and the flow mobility between the different access networks can be implemented, so as to utilize wireless bandwidths optimally and improve the transmission speed while reducing the cost of a mobile terminal and enhancing service experience for a subscriber.

### BRIEF DESCRIPTION OF THE DRAWINGS

Fig. 1 is a diagram showing the system architecture of an EPS in the related art;
Fig. 2 is a diagram showing the system architecture of the disclosure;
Fig. 3 is a diagram showing internal modules of a multi-mode mobile intelligent access device according to an embodiment of the disclosure;
Fig. 4 is a schematic diagram showing a principle by which two terminals access a core network gateway through a wireless access network according to an embodiment of the disclosure;
Fig. 5 is a schematic diagram showing a principle by which different application programs in a terminal access a core network gateway through different wireless access networks according to an embodiment of the disclosure;
Fig. 6 is a flowchart of controlling an access routing policy function entity when the access routing policy function entity is employed in a network in an embodiment of the disclosure;
Fig. 7 is a flowchart of implementing flow mobility when an access routing policy function entity is not employed in a network in an embodiment of the disclosure; and
Fig. 8 is a brief chart of a multi-mode intelligent access flow according to an embodiment of the disclosure.

### DETAILED DESCRIPTION

In practical applications, an intelligent access device can be provided, which may use multiple kinds of access networks at the same time and implement flow mobility between the different access networks, so as to utilize wireless bandwidths optimally, improve the transmission speed and implement the flow mobility between the different access networks while reducing the cost of a mobile terminal and enhancing service experience for a subscriber.

The technical solutions of the disclosure are further elaborated below with reference to the drawings and specific embodiments.

### Embodiment 1

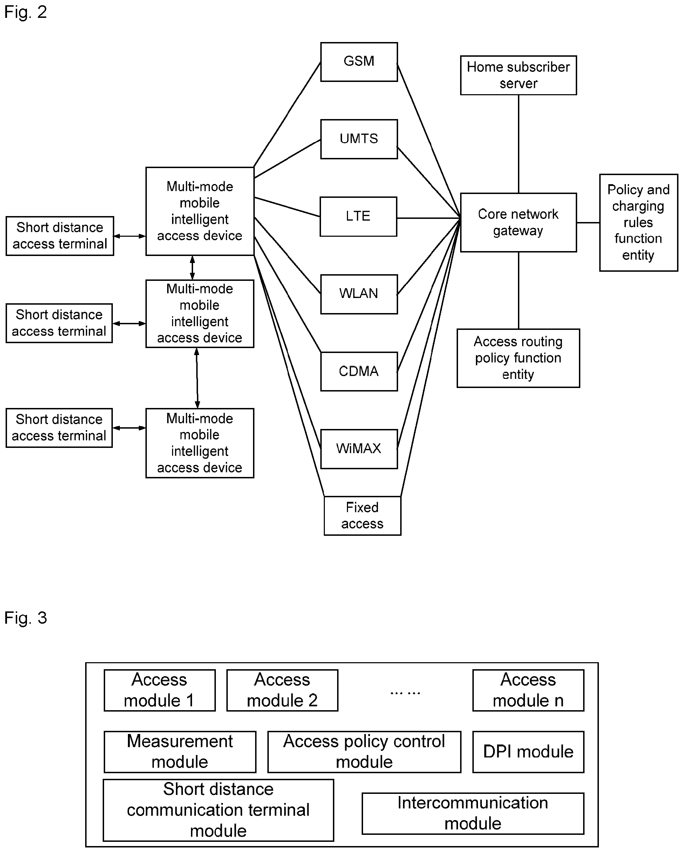

The embodiment describes an architecture diagram of a system including multi-mode mobile intelligent access devices as shown in Fig. 2. The multi-mode mobile intelligent access device can access a core network gateway simultaneously through multiple kinds of access networks such as a GSM network, a UMTS network, an LTE network, a CDMA network, a WiMAX network, a WLAN network and a fixed access network, thus increasing users' bandwidths. The core network gateway assigns an IP address of a device for a user, and the multi-mode mobile intelligent access device supports to access multiple access networks simultaneously, and supports the terminal to receive and send data through the multiple kinds of access networks at the same time. An HSS stores subscription information and authentication information of users and information of the core network gateway currently used by the users.

A terminal may access the multi-mode mobile intelligent access device through short distance communication technologies such as Bluetooth technology, Zigbee technology, IR technology or Wifi technology. The multi-mode mobile intelligent access device supports intercommunication between the multi-mode mobile intelligent access device and other multi-mode mobile intelligent access devices, so that terminals affiliated to the other multi-mode mobile intelligent access devices can also access the core network gateway via the multi-mode mobile intelligent access device, thus broadening a coverage area.

A PCRF entity is mainly configured to decide the QoS policy and the charging policy according to subscription information of subscribers and current service information, and send the QoS policy and the charging policy to the P-GW. In Fig. 2, an access routing policy function entity is added to decide an access network via which data flow in the multi-mode mobile intelligent access device is transmitted.

The access routing policy function entity may send current policy information to the core network gateway, and the core network gateway may send the policy information to the wireless multi-mode mobile intelligent access device through the user plane, so as to trigger the flow mobility or trigger a subscriber to reselect a new access network. The access routing policy function entity may acquire the current access type of the subscriber from the core network gateway, and may also acquire related information of the network, such as the congestion condition of the network in which the subscriber is currently located, network failure information and information of the service currently used by the subscriber, through reports of a network device management system and the multi-mode mobile intelligent access device or through a special information collecting device in the network, and formulate uplink and downlink routing policies according to the related information of the network. The access routing policy function entity may be integrated as a whole together with the PCRF entity, or may also be an independent network element.

In practical applications, a terminal may access a multi-mode mobile intelligent access device, and the multi-mode mobile intelligent access device assigns a local IP address for the terminal; and the multi-mode mobile intelligent access device accesses a 3G network and a WLAN network and is anchored to the same core network gateway, the core network gateway assigns the same IP address for the multi-mode mobile intelligent access device. The terminal accesses the multi-mode mobile intelligent access device through the WLAN network, and initiates VoIP and download services; and the access routing policy function entity decides a routing policy: selecting the 3G network to transmit the VoIP service while selecting the WLAN network to transmit the download service. The access routing policy function entity sends the related access routing information to the core network gateway and the multi-mode mobile intelligent access device, wherein the access routing information includes a five tuple for detecting data flow (including a destination IP address, a destination port number, a source IP address, a source port number and a transmission protocol number, which can uniquely detect a piece of service flow) and wireless network information corresponding to the data flow. Accordingly, the core network gateway routes downlink data packets according to the access routing information, and checks whether uplink data packets are matched with the wireless network; and the multi-mode mobile intelligent access device determines routing of the uplink data according to the access routing information.

### Embodiment 2

Fig. 3 shows internal modules of a multi-mode mobile intelligent access device of the disclosure. The multi-mode mobile intelligent access device includes multiple access modules, a signal measurement module, an access policy control module, a DPI module, a short distance communication terminal module and an intercommunication module. Wherein, the access module is a receiving and sending module supporting various wireless technologies (such as LTE, GSM, UMTS, CDMA, WLAN and WiMAX technologies), or a fixed access module, and may be configured according to the need of the subscriber, namely, the subscriber may configure some of the multiple access modules. The signal measurement module is configured to detect the strength of signals of various wireless base stations. The access policy control module is configured to acquire and store an uplink routing policy issued by an access routing policy function entity, and route uplink data according to the uplink routing policy. The DPI module is configured to detect the service type of terminal data. The short distance communication terminal module is configured to access a terminal supporting short distance technology, wherein the short distance technology specifically includes Bluetooth, Zigbee, WLAN or IR technologies. The intercommunication module is configured to support adjacent other multi-mode terminal access device to access the multi-mode mobile intelligent access device, and utilize the access module of the multi-mode mobile intelligent access device to access a core network gateway, thus improving wireless coverage.

### Embodiment 3

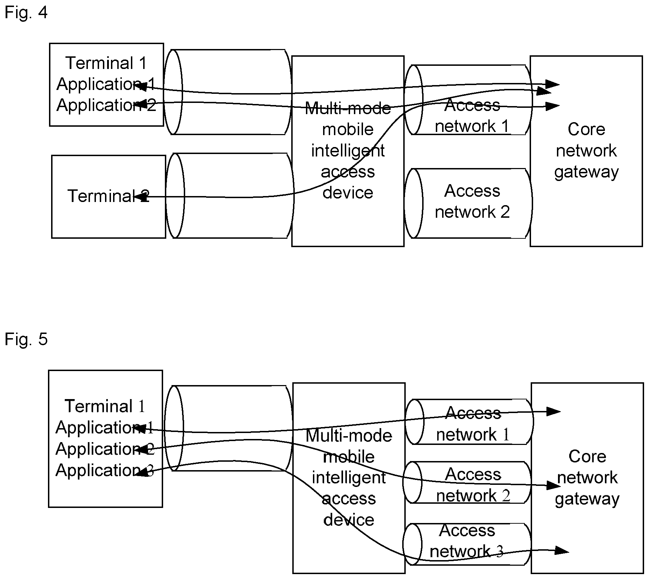

Fig. 4 shows a scenario in which two terminals access a core network gateway through a wireless access network. In the scenario, for an uplink data message, after receiving data messages from a terminal 1 and a terminal 2, an access policy control module of a multi-mode mobile intelligent access device learns, according to five tuples of the data messages and stored routing policies, that the data messages are to be forwarded through an access network 1, and then forwards the data messages through the access network 1. For a downlink data message, the access policy control module of the multi-mode mobile intelligent access device discriminates different terminals according to the five tuples, and sends data messages to the different terminals. The different terminals may be discriminated through IP addresses of the five tuples, or may also be discriminated through a same IP address plus different port numbers. In the scenario, if the terminal 1 has multiple application programs, the terminal 1 may discriminate different application programs according to the port numbers.

Fig. 5 shows a scenario in which different applications in a terminal access a core network gateway through different wireless access networks. A multi-mode mobile intelligent access device may discriminate different uplink routes according to different five tuples of data packets, and the core network gateway may discriminate different downlink routes according to the different five tuples. After data messages reach the multi-mode mobile intelligent access device, the access policy control module routes the data messages to a terminal according to the five tuples. The terminal detects different application programs according to different port numbers, and forwards the data messages to the corresponding application programs.

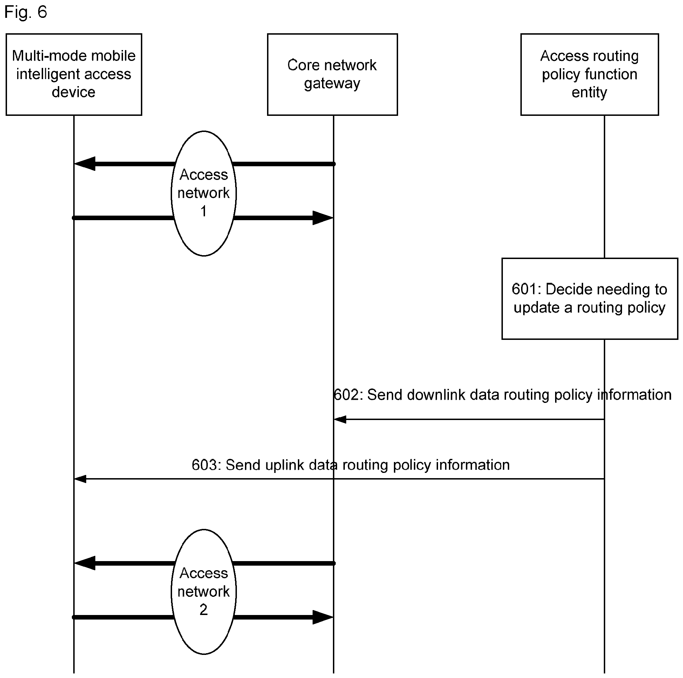

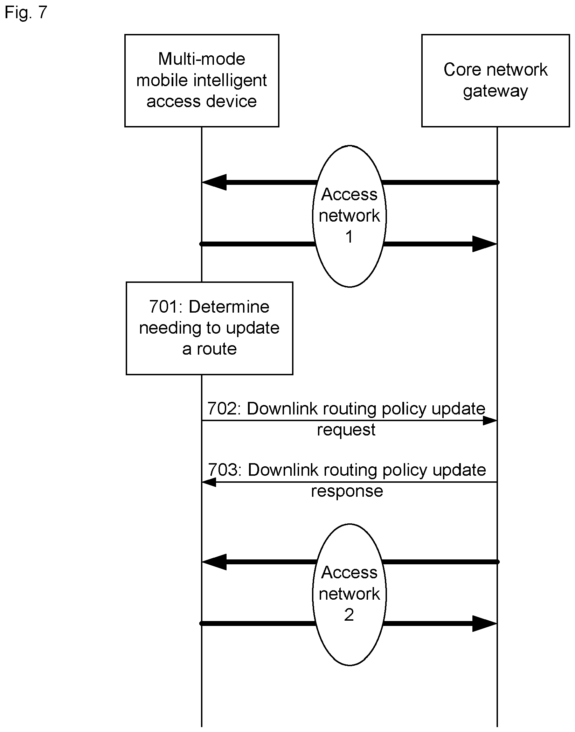

During the process of updating routing policies by the access routing policy function entity, for the downlink policy, the downlink policy is issued by the access routing policy function entity to the core network gateway, and the core network gateway executes the downlink data policy; for the unlink policy, there are three modes as follows: 1) the access routing policy function entity sends an uplink policy to the multi-mode mobile intelligent access device, referring to Fig. 6; 2) a reflection-type policy: the uplink routing mode and the downlink routing mode are same for data flow, namely, the multi-mode mobile intelligent access device receives downlink data flow from a certain access network, then uplink data flow corresponding to the downlink data flow is also sent from the access network, referring to Fig. 6; and 3) the multi-mode mobile intelligent access device acquires service information through DPI and determines the uplink routing policy by itself, referring to Fig. 7.

Fig. 6 is a schematic flowchart of updating an access routing policy when an access routing policy function entity is employed in a network. At the beginning, uplink and downlink service data are transmitted through an access network 1. The flow shown in Fig. 6 includes the following steps:
Step 601: The access routing policy function entity decides needing to update a routing policy, and determines a new routing policy according to Fig. 2. When the operation of the step is triggered, a multi-mode mobile intelligent access device may initiatively request the access routing policy function entity to update the routing policy, and carry all access information (such as wireless signal strength of all access networks) of a current position in the request, or the access routing policy function entity may select, according to information of the position where the subscriber is located currently, that the access network 2 is more applicable for transmitting service data, and then trigger updating of the routing policy.
Step 602: The access routing policy function entity sends a downlink routing policy to a core network gateway, wherein the downlink routing policy includes the five tuple of downlink data flow and the type of the corresponding access network 2. Alternatively, the access routing policy function entity also sends the five tuple of uplink data flow and the type of the corresponding access network 2 to the core network gateway, for verifying the uplink data flow of the subscriber. The core network gateway stores the downlink routing policy.
Step 603: The access routing policy function entity sends policy information (including the uplink routing policy such as the five tuple of the uplink data flow and the type of the corresponding access network 2) to a multi-mode mobile intelligent access device. The policy information may also include the access parameter of the access network 2, such as frequency bands of the 3G or LTE network and a Service Set Identifier (SSID) of the WLAN. The multi-mode mobile intelligent access device stores the uplink routing policy, triggers the access authentication in the access network 2, and transmits data messages through the access network 2.

Another mode of updating the uplink routing policy is referred to as reflection-type routing: the intelligent access network selects downlink data packets of the flow received from the access network 2, and then sends uplink data packets corresponding to the flow in the access network 2, so that the access routing policy function entity does not need to inform the multi-mode mobile intelligent access device of the uplink routing policy.

Fig. 7 is a flowchart of implementing updating of access policies when an access routing policy function entity is not employed in a network.

Step 701: A multi-mode intelligent access device detects a service through a DPI function, after measurement, selects a more appropriate access network 2 for transmission of the service, then accesses the access network 2, and updates the access routing five tuple in an access policy control module, so as to transmit uplink data messages from the access network 2.

Step 702: The multi-mode intelligent access device sends a downlink routing policy update request to a core network gateway to indicate that downlink data related to the service are transmitted via the access network 2.

Step 703: After receiving the downlink routing policy update request, the core network gateway updates the related five tuple for routing the downlink data, and returns a response message to the multi-mode intelligent access device.

In Step 701, the multi-mode mobile intelligent access device may select the type of a new service through the DPI function, but a currently activated APN cannot be applied to the new service. Then, the multi-mode mobile intelligent access device may initiate a new data link using a new APN, access a new core network gateway and acquire a new IP address, and transmit the new service in the new data link.

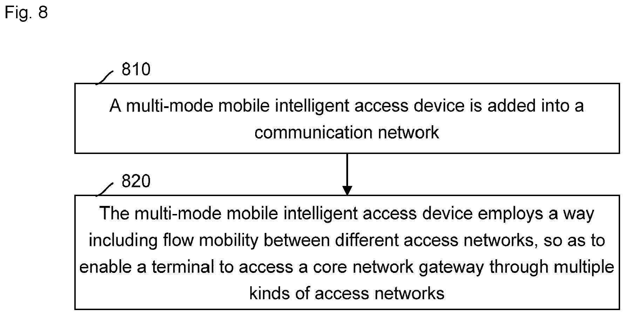

It can be seen in combination with the above descriptions that an operation idea involved to the multi-mode intelligent access technology of the disclosure is as shown in the flow in Fig. 8. The flow includes the following steps:
Step 810: A multi-mode mobile intelligent access device is added into a communication network.
Step 820: The multi-mode mobile intelligent access device employs a way including flow mobility between different access networks, so as to enable a terminal to access a core network gateway through multiple kinds of access networks.

In practical applications, Step 810 is advance preparation, once the multi-mode mobile intelligent access device is added into the communication network, Step 820 may be executed when a terminal needs to access a core network gateway, without repeated executions of Step 810 before Step 820 is executed every time. In the aforementioned descriptions, the operation that the core network gateway executes the downlink routing policy and the operation that the core network gateway sends the uplink routing policy information to the multi-mode mobile intelligent access device may not in chronological order.

It should be noted that the above-mentioned multi-mode intelligent access device is a multi-mode mobile intelligent access device added into a communication network, wherein the multi-mode mobile intelligent access device is configured to employ a way including flow mobility between different access networks, so as to enable a terminal to access a core network gateway through multiple kinds of access networks.

The multi-mode mobile intelligent access device, when performing flow mobility, is configured to:
detect a service; after measurement, select a more appropriate access network for transmission of the service, and access the more appropriate access network and control the more appropriate access network to transmit an uplink data message; and update a downlink routing policy for the more appropriate access network through interaction between the multi-mode mobile intelligent access device and the core network gateway.

For an uplink data message, the multi-mode mobile intelligent access device is configured to forward the uplink data message according to a five tuple of a data packet and a stored routing policy; and
for a downlink data message, the multi-mode mobile intelligent access device is configured to determine a terminal corresponding to the downlink data message according to a five tuple of a data packet, and send the downlink data message to the terminal corresponding to the downlink data message.

The multi-mode mobile intelligent access device is further configured to support the terminal to access the multiple kinds of access networks at the same time and support the terminal to receive and send data through the multiple kinds of access networks at the same time; and/or

When there are a plurality of the multi-mode mobile intelligent access devices, the plurality of the multi-mode mobile intelligent access devices are configured to communicate with each other.

An access routing policy function entity is added into the communication network, wherein the access routing policy function entity is configured to decide an access network via which data flow in the multi-mode mobile intelligent access device is transmitted.

The access routing policy function entity is further configured to:
send uplink and downlink routing policy information to the core network gateway; and trigger the core network gateway to execute a downlink routing policy and to send the uplink routing policy information to a wireless multi-mode mobile intelligent access device, so as to trigger the flow mobility or trigger a subscriber to reselect a new access network.

The access routing policy function entity is further configured to:
formulate uplink and downlink routing policies by acquiring a current access type of the subscriber from the core network gateway, and by acquiring related information of the network from a report of a network device management system, or from a report of the multi-mode mobile intelligent access device, or from a specific information collecting device in the network.

When the multi-mode mobile intelligent access device performs the flow mobility,
the access routing policy function entity is configured to determine to update the uplink and downlink routing policies, or the multi-mode mobile intelligent access device is configured to request the access routing policy function entity to update the uplink and downlink routing policies;
the access routing policy function entity is further configured to send the downlink routing policy to the core network gateway, and send the uplink routing policy to the multi-mode mobile intelligent access device via the core network gateway; and
the multi-mode mobile intelligent access device is configured to store the uplink routing policy, trigger an access authentication of an access network to which flow is transmitted, and transmit data messages through the access network.

The multi-mode mobile intelligent access device is further configured to acquire service information through Deep Packet Inspection (DPI), determine the uplink routing policy, and request the access routing policy function entity to update the downlink routing policy.

The multi-mode mobile intelligent access device includes: an access module, a signal measurement module, an access policy control module, a DPI module, a short distance communication terminal module and an intercommunication module.

Furthermore, a multi-mode intelligent access system may also be provided based on the aforementioned multi-mode intelligent access device. The multi-mode intelligent access system applies to a communication network including a core network gateway and multiple kinds of access networks; and a multi-mode mobile intelligent access device is added into a communication network, wherein the multi-mode mobile intelligent access device is configured to employ a way including flow mobility between different access networks, so as to enable a terminal to access a core network gateway through multiple kinds of access networks.

The multi-mode mobile intelligent access device includes: an access module, a signal measurement module, an access policy control module, a DPI module, a short distance communication terminal module and an intercommunication module.

When there are a plurality of the multi-mode mobile intelligent access devices, the plurality of the multi-mode mobile intelligent access devices are configured to communicate with each other.

The multi-mode intelligent access system is provided with an access routing policy function entity configured to decide an access network via which data flow in the multi-mode mobile intelligent access device is transmitted.

To sum up, by means of the multi-mode intelligent access technology of the disclosure, the method, device and system of the disclosure can enable a terminal to use multiple kinds of access networks at the same time, and implement flow mobility between the different access networks, so as to utilize wireless bandwidths optimally and improve the transmission speed while reducing the cost of a mobile terminal and enhancing service experience for a subscriber.

The above are only preferable embodiments of the disclosure, and are not intended to limit the scope of protection of the claims of the disclosure.

## Claims

1. A multi-mode intelligent access method, comprising:
adding a multi-mode mobile intelligent access device into a communication network (S810); and
employing, by the multi-mode mobile intelligent access device, a way including flow mobility between different access networks, so as to enable a terminal to access a core network gateway through multiple kinds of access networks (S820); **characterized in that** the method further comprising:
adding an access routing policy function entity into the communication network, wherein the access routing policy function entity is integrated as a whole together with a Policy and Charging Rules Function, PCRF, entity, or is an independent network element; and
deciding, by the access routing policy function entity, an access network via which data flow in the multi-mode mobile intelligent access device is transmitted;
wherein the step of the deciding, by the access routing policy function entity, an access network via which data flow in the multi-mode mobile intelligent access device is transmitted comprises:
sending, by the access routing policy function entity, uplink and downlink routing policy information to the core network gateway; wherein uplink and downlink routing policies are formulated by the access routing policy function entity by acquiring a current access type of the subscriber from the core network gateway, and by acquiring related information of the network from a report of a network device management system, or from a report of the multi-mode mobile intelligent access device, or from a specific information collecting device in the network;
executing, by the core network gateway, a downlink routing policy; and
sending, by the core network gateway, the uplink routing policy information to the multi-mode mobile intelligent access device, so as to trigger the flow mobility or trigger a subscriber to reselect a new access network.

2. The multi-mode intelligent access method according to claim 1, wherein the flow mobility comprises:
detecting, by the multi-mode mobile intelligent access device, a service;
after measurement, selecting, by the multi-mode mobile intelligent access device, a more appropriate access network for transmission of the service;
the multi-mode mobile intelligent access device accessing the more appropriate access network;
controlling the more appropriate access network to transmit uplink data; and
updating, by the multi-mode mobile intelligent access device, a downlink routing policy for the more appropriate access network through interaction between the multi-mode mobile intelligent access device and the core network gateway.

3. The multi-mode intelligent access method according to claim 1, wherein
the multi-mode mobile intelligent access device supports the terminal to access the multiple kinds of access networks at the same time and supports the terminal to receive and send data through the multiple kinds of access networks at the same time; and/or
wherein when there are a plurality of the multi-mode mobile intelligent access devices, the plurality of the multi-mode mobile intelligent access devices communicate with each other directly.

4. The multi-mode intelligent access method according to claim 1, wherein the flow mobility comprises:
determining, by the access routing policy function entity, to update the uplink and downlink routing policies (S601), or requesting, by the multi-mode mobile intelligent access device, the access routing policy function entity to update the uplink and downlink routing policies;
sending, by the access routing policy function entity, the downlink routing policy to the core network gateway (S602), and sending the uplink routing policy to the multi-mode mobile intelligent access device via the core network gateway (S603); and
storing, by the multi-mode mobile intelligent access device, the uplink routing policy, selecting and triggering an access authentication of an access network to which flow is transmitted, and transmitting data messages through the access network.

5. An access routing policy function entity, wherein the access routing policy function entity is integrated as a whole together with a Policy and Charging Rules Function, PCRF, entity, or is an independent network element; wherein the access routing policy function entity is configured to decide an access network via which data flow in a multi-mode mobile intelligent access device is transmitted;
wherein the access routing policy function entity is further configured to:
send uplink and downlink routing policy information to the core network gateway; and trigger the core network gateway to execute a downlink routing policy and to send the uplink routing policy information to the wireless multi-mode mobile intelligent access device, so as to trigger the flow mobility or trigger a subscriber to reselect a new access network; wherein uplink and downlink routing policies are formulated by the access routing policy function entity by acquiring a current access type of the subscriber from the core network gateway, and by acquiring related information of the network from a report of a network device management system, or from a report of the multi-mode mobile intelligent access device, or from a specific information collecting device in the network.

6. The access routing policy function entity according to claim 5, wherein when the multi-mode mobile intelligent access device performs flow mobility,
the access routing policy function entity is configured to determine to update the uplink and downlink routing policies, or the multi-mode mobile intelligent access device is configured to request the access routing policy function entity to update the uplink and downlink routing policies; and
the access routing policy function entity is further configured to send the downlink routing policy to the core network gateway, and send the uplink routing policy to the multi-mode mobile intelligent access device via the core network gateway.

7. A multi-mode intelligent access system, applied to a communication network comprising a core network gateway and multiple kinds of access networks, **characterized in that**: the multi-mode intelligent access system comprises a multi-mode mobile intelligent access device and an access routing policy function entity; wherein
the multi-mode mobile intelligent access device is configured to employ a way including flow mobility between different access networks, so as to enable a terminal to access a core network gateway through multiple kinds of access networks;
the access routing policy function entity configured to decide an access network via which data flow in the multi-mode mobile intelligent access device is transmitted; wherein the access routing policy function entity is integrated as a whole together with a Policy and Charging Rules Function, PCRF, entity, or is an independent network element;
the access routing policy function entity is further configured to send uplink and downlink routing policy information to the core network gateway; and trigger the core network gateway to execute a downlink routing policy and to send the uplink routing policy information to the wireless multi-mode mobile intelligent access device, so as to trigger the flow mobility or trigger a subscriber to reselect a new access network; wherein uplink and downlink routing policies are formulated by the access routing policy function entity by acquiring a current access type of the subscriber from the core network gateway, and by acquiring related information of the network from a report of a network device management system, or from a report of the multi-mode mobile intelligent access device, or from a specific information collecting device in the network.

8. The multi-mode intelligent access system according to claim 7, wherein the multi-mode mobile intelligent access device comprises: an access module, a signal measurement module, an access policy control module, a Deep Packet Inspection, DPI, module, a short distance communication terminal module and an intercommunication module.

9. The multi-mode intelligent access system according to claim 7, wherein when there are a plurality of the multi-mode mobile intelligent access devices, the plurality of the multi-mode mobile intelligent access devices are configured to communicate with each other.

## Patentansprüche

1. Multimodales intelligentes Zugriffsverfahren, folgendes umfassend:
Hinzufügen einer multimodalen mobilen intelligenten Zugriffseinheit in ein Kommunikationsnetz (8810); und
Verwenden, durch die multimodale mobile intelligente Zugriffseinheit, eines Wegs, einschließlich Flussmobilität zwischen verschiedenen Zugriffsnetzen, so dass eine Anschlussstelle befähigt wird, auf ein Kernnetzgateway über mehrere Arten von Zugriffsnetzen (8820) zuzugreifen; **dadurch gekennzeichnet, dass** das Verfahren weiterhin Folgendes umfasst:
Hinzufügen einer Zugriffsrouting-Richtlinienfunktionsinstanz in das Kommunikationsnetz, wobei die Zugriffsrouting-Richtlinienfunktionsinstanz als Ganzes zusammen mit einer Policy-and-Charging-Rules-Functions(PCRF)-Instanz integriert ist oder ein unabhängiges Netzelement ist; und Bestimmen, durch die Zugriffsrouting-Richtlinienfunktionsinstanz, eines Zugriffsnetzes, über das der Datenfluss in die multimodale mobile intelligente Zugriffseinheit übertragen wird;
wobei der Schritt des Bestimmens, durch die Zugriffsrouting-Richtlinienfunktionsinstanz, eines Zugriffsnetzes, über das der Datenfluss in der multimodalen mobilen intelligenten Zugriffseinheit übertragen wird, Folgendes umfasst:
Senden, durch die Zugriffsrouting-Richtlinienfunktionsinstanz, von Uplink- und Downlink-Routing-Richtlinieninformationen an das Kernnetzgateway; wobei Uplink- und Downlink-Routing-Richtlinien formuliert werden durch die Zugriffsrouting-Richtlinienfunktionsinstanz durch Erfassen eines aktuellen Zugriffstyps des Teilnehmers aus dem Kernnetzgateway und durch Erfassen von damit zusammenhängenden Informationen des Netzes aus einem Bericht eines Netzeinheit-Verwaltungssystems oder aus einem Bericht der multimodalen mobilen intelligenten Zugriffseinheit, oder aus einer speziellen Informationssammeleinheit in dem Netz;
Ausführen, durch das Kernnetzgateway, einer Downlink-Routing-Richtlinie; und
Senden, durch das Kernnetzgateway, der Uplink-Routing-Richtlinieninformationen an die multimodale mobile intelligente Zugriffseinheit, so dass die Flussmobilität ausgelöst wird, oder ein Teilnehmer veranlasst wird, ein neues Zugriffsnetz zu wählen.

2. Multimodales intelligentes Zugriffsverfahren nach Anspruch 1, wobei die Flussmobilität Folgendes umfasst:
Nachweisen, durch die multimodale mobile intelligente Zugriffseinheit, eines Dienstes; nach dem Messen, Wählen, durch die multimodale mobile intelligente Zugriffseinheit, eines zur Übermittlung des Dienstes besser geeigneten Zugriffsnetzes;
wobei die multimodale mobile intelligente Zugriffseinheit auf das besser geeignete Zugriffsnetz zugreift; Steuern des besser geeigneten Zugriffsnetzes zur Übermittlung von Uplink-Daten, und Aktualisieren, durch die multimodale mobile intelligente Zugriffseinheit, einer Downlink-Routing-Richtlinie für das besser geeignete Zugriffsnetz durch Wechselwirkung zwischen der multimodalen mobilen intelligenten Zugriffseinheit und dem Kernnetzgateway.

3. Multimodales intelligentes Zugriffsverfahren nach Anspruch 1, wobei
die multimodale mobile intelligente Zugriffseinheit die Anschlussstelle trägt, um auf die mehreren Arten von Zugriffsnetzen gleichzeitig zuzugreifen, und die Anschlussstelle trägt, um Daten über die mehreren Arten von Zugriffsnetzen gleichzeitig zu empfangen; und/oder
wobei, wenn eine Vielzahl der multimodalen mobilen intelligenten Zugriffseinheiten vorhanden ist, die Vielzahl der multimodalen mobilen intelligenten Zugriffseinheiten miteinander direkt kommuniziert.

4. Multimodales intelligentes Zugriffsverfahren nach Anspruch 1, wobei die Flussmobilität Folgendes umfasst:
Bestimmen, durch die Zugriffsrouting-Richtlinienfunktionsinstanz, der Aktualisierung der Uplink- und Downlink-Routing-Richtlinien (8601), oder Auffordern, durch die multimodale mobile intelligente Zugriffseinheit, der Zugriffsrouting-Richtlinienfunktionsinstanz, die Uplink- und Downlink-Routing-Richtlinien zu aktualisieren;
Senden, durch die Zugriffsrouting-Richtlinienfunktionsinstanz, der Downlink-Routing-Richtlinie an das Kernnetzgateway (8602), und Senden der Uplink-Routing-Richtlinie an die multimodale mobile intelligente Zugriffseinheit über das Kernnetzgateway (8603); und
Speichern, durch die multimodale mobile intelligente Zugriffseinheit, der Uplink-Routing-Richtlinie, Wählen und Auslösen einer Zugriffsauthentifizierung eines Zugriffsnetzes, an das der Fluss übermittelt wird, und Übermitteln von Datenmitteilungen durch das Zugriffsnetz.

5. Zugriffsrouting-Richtlinienfunktionsinstanz, wobei die Zugriffsrouting-Richtlinienfunktionsinstanz als Ganzes zusammen mit einer Policy-and-Charging-Rules-Functions(PCRF)-Instanz integriert ist oder ein unabhängiges Netzelement ist; wobei die Zugriffsrouting-Richtlinienfunktionsinstanz zur Bestimmung eines Zugriffsnetzes konfiguriert ist, über das der Datenfluss in eine multimodale mobile intelligente Zugriffseinheit übertragen wird;
wobei die Zugriffsrouting-Richtlinienfunktionsinstanz weiterhin konfiguriert ist zum:
Senden von Uplink- und Downlink-Routing-Richtlinieninformationen an das Kernnetzgateway; und Veranlassen, dass das Kernnetzgateway eine Downlink-Routing-Richtlinie ausführt und die Uplink-Routing-Richtlinieninformationen an die drahtlose multimodale mobile intelligente Zugriffseinheit sendet, so dass die Flussmobilität ausgelöst oder ein Teilnehmer dazu gebracht wird, ein neues Zugriffsnetz zu wählen; wobei Uplink- und Downlink-Routing-Richtlinien formuliert werden durch die Zugriffsrouting-Richtlinienfunktionsinstanz durch Erfassen eines aktuellen Zugriffstyps des Teilnehmers aus dem Kernnetzgateway, und durch Erfassen von damit zusammenhängenden Informationen des Netzes aus einem Bericht eines Netzeinheit-Verwaltungssystems, oder aus einem Bericht der multimodalen mobilen intelligenten Zugriffseinheit, oder aus einer speziellen Informationssammeleinheit in dem Netz.

6. Zugriffsrouting-Richtlinienfunktionsinstanz nach Anspruch 5, wobei, wenn die multimodale mobile intelligente Zugriffseinheit Flussmobilität durchführt,
die Zugriffsrouting-Richtlinienfunktionsinstanz zur Bestimmung der Aktualisierung der die Uplink- und Downlink-Routing-Richtlinien konfiguriert ist, oder die multimodale mobile intelligente Zugriffseinheit zur Aufforderung der Zugriffsrouting-Richtlinienfunktionsinstanz, die Uplink- und Downlink-Routing-Richtlinien zu aktualisieren, konfiguriert ist; und
die Zugriffsrouting-Richtlinienfunktionsinstanz weiterhin konfiguriert ist, die Downlink-Routing-Richtlinie an das Kernnetzgateway zu senden, und die Uplink-Routing-Richtlinie über das Kernnetzgateway an die multimodale mobile intelligente Zugriffseinheit zu senden.

7. Multimodales intelligentes Zugriffssystem, das auf ein Kommunikationsnetz angewandt wird, umfassend ein Kernnetzgateway und mehrere Arten von Zugriffsnetzen, **dadurch gekennzeichnet, dass**: das multimodale intelligente Zugriffssystem eine multimodale mobile intelligente Zugriffseinheit und eine Zugriffsrouting-Richtlinienfunktionsinstanz umfasst; wobei
die multimodale mobile intelligente Zugriffseinheit zur Verwendung eines Weges, einschließlich Flussmobilität zwischen verschiedenen Zugriffsnetzen, konfiguriert ist, so dass eine Anschlussstelle zum Zugriff auf ein Kernnetzgateway über mehrere Arten von Zugriffsnetzen befähigt wird;
die Zugriffsrouting-Richtlinienfunktionsinstanz konfiguriert ist, ein Zugriffsnetz zu bestimmen, über das der Datenfluss in der multimodalen mobilen intelligenten Zugriffseinheit übertragen wird; wobei die Zugriffsrouting-Richtlinienfunktionsinstanz als Ganzes zusammen mit einer Policy-and-Charging-Rules-Functions(PCRF)-Instanz integriert ist, oder ein unabhängiges Netzelement ist;
die Zugriffsrouting-Richtlinienfunktionsinstanz weiterhin konfiguriert ist, Uplink- und Downlink-Routing-Richtlinieninformationen an das Kernnetzgateway zu senden; und das Kernnetzgateway zu veranlassen, eine Downlink-Routing-Richtlinie auszuführen und die Uplink-Routing-Richtlinieninformationen an die drahtlose multimodale mobile intelligente Zugriffseinheit zu senden, so dass die Flussmobilität ausgelöst wird, oder ein Teilnehmer veranlasst wird, ein neues Zugriffsnetz zu wählen; wobei Uplink- und Downlink-Routing-Richtlinien formuliert werden durch die Zugriffsrouting-Richtlinienfunktionsinstanz durch Erfassen eines aktuellen Zugriffstyps des Teilnehmers aus dem Kernnetzgateway, und durch Erfassen von damit zusammenhängenden Informationen des Netzes aus einem Bericht eines Netzeinheit-Verwaltungssystems, oder aus einem Bericht der multimodalen mobilen intelligenten Zugriffseinheit, oder aus einer speziellen Informationssammeleinheit in dem Netz.

8. Multimodales intelligentes Zugriffssystem nach Anspruch 7, wobei die multimodale mobile intelligente Zugriffseinheit Folgendes umfasst: ein Zugriffsmodul, ein Signalmessmodul, ein Zugriffsrichtliniensteuerungsmodul, ein Deep-Packet-Inspection (DPI)-Modul, ein Kommunikationsendmodul für kurze Entfernungen und ein Interkommunikationsmodul.

9. Multimodales intelligentes Zugriffssystem nach Anspruch 7, wobei, wenn eine Vielzahl der multimodalen mobilen intelligenten Zugriffseinheiten vorhanden ist, die Vielzahl der multimodalen mobilen intelligenten Zugriffseinheiten zum Datenaustausch untereinander konfiguriert ist.

## Revendications

1. Procédé d'accès intelligent multimode, comprenant les opérations consistant à :
ajouter un dispositif d'accès intelligent mobile multimode dans un réseau de communication (S810) ; et
employer, au moyen du dispositif d'accès intelligent mobile multimode, une méthode incluant la mobilité de flux entre différents réseaux d'accès, de façon à permettre à un terminal d'accéder à une passerelle centrale de réseau au travers de multiples types de réseaux d'accès (S820) ; **caractérisé en ce que** le procédé comprend en outre :
l'ajout d'une entité fonctionnelle de politique de routage d'accès dans le réseau de communication, dans laquelle l'entité fonctionnelle de politique de routage d'accès est intégrée comme un tout avec une entité fonctionnelle de politique et de règles de facturation, PCRF (Policy and Charging Rules Function), ou est un élément de réseau indépendant ; et
décider, au moyen de l'entité fonctionnelle de politique de routage d'accès, d'un réseau d'accès au travers duquel un flux de données dans le dispositif d'accès intelligent mobile multimode est transmis ;
dans lequel l'étape de décision, au moyen de l'entité fonctionnelle de politique de routage d'accès, d'un réseau d'accès au travers duquel est transmis le un flux de données dans le dispositif d'accès intelligent mobile multimode,
comprend les étapes consistant à :
envoyer, au moyen de l'entité fonctionnelle de politique de routage d'accès, des informations de politique de routage de liaison ascendante et descendante à la passerelle réseau centrale ; dans lequel les politiques de routage de liaison ascendante et descendante sont formulées par l'entité fonctionnelle de politique de routage d'accès par l'acquisition d'un type d'accès courant de l'abonné depuis la passerelle centrale de réseau, et par l'acquisition d'informations liées du réseau à partir d'un rapport d'un système de gestion de dispositif réseau, ou à partir d'un rapport du dispositif d'accès intelligent mobile multimode, ou à partir d'un dispositif spécifique de collecte d'informations dans le réseau ;
exécuter, au moyen de la passerelle centrale de réseau, une politique de routage de liaison descendante ; et
envoyer, au moyen de la passerelle centrale de réseau, les informations de politique de liaison de routage ascendante au dispositif d'accès intelligent mobile multimode, de façon à déclencher la mobilité du flux ou à déclencher un abonné pour qu'il resélectionne un nouveau réseau d'accès.

2. Procédé d'accès intelligent multimode selon la revendication 1, dans lequel la mobilité du flux comprend les étapes suivantes :
détecter, au moyen du dispositif d'accès intelligent mobile multimode, un service :
après mesure, sélectionner, au moyen du dispositif d'accès intelligent mobile multimode, un réseau d'accès plus approprié pour la transmission du service ;
le dispositif d'accès intelligent mobile multimode accède au réseau d'accès le plus approprié ;
contrôler le réseau d'accès le plus approprié pour transmettre les données de liaison montante ; et
actualiser, au moyen du dispositif d'accès intelligent mobile multimode, une politique de routage de liaison descendante pour le réseau d'accès le plus approprié au travers de l'interaction entre le dispositif d'accès intelligent mobile multimode et la passerelle centrale de réseau.

3. Procédé d'accès intelligent multimode selon la revendication 1, dans lequel le dispositif d'accès intelligent mobile multimode supporte le terminal pour accéder aux différents types de réseaux d'accès en même temps et supporte le terminal pour recevoir et envoyer les données au travers des multiples types de réseaux d'accès en même temps ; et/ou
dans lequel, lorsqu'il y a une pluralité de dispositifs d'accès intelligents mobiles multimode, la pluralité des dispositifs d'accès intelligent mobiles multimode communiquent directement l'un avec l'autre.

4. Procédé d'accès intelligent multimode selon la revendication 1, dans lequel la mobilité de flux comprend les étapes consistant à :
déterminer, au moyen de l'entité fonctionnelle de politique de routage d'accès, l'actualisation des politiques de routage de liaison montante et descendante (S601) ou demander, au moyen du dispositif d'accès intelligent mobile multimode, à l'entité fonctionnelle de politique de routage d'accès d'actualiser les politiques de routage de liaison montante et descendante ;
envoyer, au moyen de l'entité fonctionnelle de politique de routage d'accès, la politique de routage de liaison descendante à la passerelle centrale de réseau (S602) et envoyer la politique de routage de liaison montante au dispositif d'accès intelligent mobile multimode via la passerelle centrale de réseau (S603) ; et
stocker, au moyen du dispositif d'accès intelligent mobile multimode, la politique de routage de liaison montante, sélectionner et déclencher une authentification d'accès d'un réseau d'accès auquel le débit est transmis, et transmettre des messages de données par l'intermédiaire du réseau d'accès.

5. Entité fonctionnelle de politique de routage d'accès, dans laquelle l'entité fonctionnelle de politique de routage d'accès est intégrée comme un tout avec une entité fonctionnelle de politique et de règles de facturation, PCRF, ou est un élément de réseau indépendant ; dans laquelle l'entité fonctionnelle de politique de routage est configurée pour décider d'un réseau d'accès via lequel le flux de données dans un dispositif d'accès intelligent mobile multimode est transmis ;
dans laquelle l'entité fonctionnelle de politique de routage d'accès est en outre configurée pour :
envoyer des informations de politique de routage de liaison montante et de liaison descendante à la passerelle centrale de réseau ; et déclencher la passerelle centrale de réseau pour exécuter une politique de routage de liaison descendante et pour envoyer les informations de politique de routage de liaison ascendante au dispositif d'accès intelligent mobile multimode sans fil, de façon à déclencher la mobilité du flux ou déclencher un abonné à resélectionner un nouveau réseau d'accès ; dans lequel les politiques de routage de liaison ascendante et de liaison descendante sont formulées par l'entité fonctionnelle de politique de routage par l'acquisition d'un type d'accès courant de l'abonné depuis la passerelle centrale de réseau, et par l'acquisition des informations liées du réseau à partir d'un rapport du système de gestion de dispositif réseau, ou à partir d'un rapport du dispositif d'accès intelligent mobile multimode, ou à partir d'un dispositif spécifique de collecte d'informations dans le réseau.

6. Entité fonctionnelle de politique de routage d'accès selon la revendication 5, dans laquelle lorsque le dispositif d'accès intelligent mobile multimode effectue une mobilité de flux,
l'entité fonctionnelle de politique de routage d'accès est configurée pour déterminer l'actualisation des politiques de routage de liaison montante et de liaison descendante, ou le dispositif d'accès intelligent mobile multimode est configuré pour demander à l'entité fonctionnelle de politique de routage d'accès d'actualiser les politiques de routage de liaison montante et de liaison descendante ; et
l'entité fonctionnelle de politique de routage d'accès est en outre configurée pour envoyer la politique de routage de liaison descendante vers la passerelle centrale de réseau et envoyer la politique de routage de liaison montante vers le dispositif d'accès intelligent mobile multimode via la passerelle centrale de réseau.

7. Système d'accès intelligent multimode, appliqué à un réseau de communication comprenant une passerelle centrale de réseau et de multiples types de réseaux d'accès, **caractérisé en ce que** : le système d'accès intelligent multimode comprend un dispositif d'accès intelligent mobile multimode et une entité fonctionnelle de politique de routage d'accès ; dans lequel le dispositif d'accès intelligent mobile multimode est configuré pour employer une méthode incluant la mobilité de flux entre différents réseaux d'accès, de façon à permettre à un terminal d'accéder à une passerelle centrale de réseau au travers de types multiples de réseaux d'accès ;
l'entité fonctionnelle de politique de routage d'accès est configurée pour décider d'un réseau d'accès via lequel le flux de données dans le dispositif d'accès intelligent de mobile multimode est transmis ; dans lequel l'entité fonctionnelle de politique de routage d'accès est intégrée comme un tout avec une entité fonctionnelle de politique et de règles de facturation, PCRF, ou est un élément réseau indépendant ;
l'entité fonctionnelle de politique de routage d'accès est en outre configurée pour envoyer des informations de politique de liaison montante et de liaison descendante à la passerelle centrale de réseau ; et déclencher la passerelle centrale de réseau pour exécuter une politique de routage de liaison descendante et pour envoyer les informations de politique de routage de liaison montante au dispositif d'accès intelligent mobile multimode, de façon à déclencher la mobilité de flux ou déclencher un abonné à resélectionner un nouveau réseau d'accès ; dans lequel des politiques de routage de liaison montante et de liaison descendante sont formulées par l'entité fonctionnelle de politique de routage d'accès par l'acquisition d'un type d'accès courant de l'abonné depuis la passerelle centrale de réseau et par l'acquisition d'informations liées du réseau à partir d'un rapport d'un système de gestion de dispositif réseau, ou à partir d'un rapport du dispositif d'accès intelligent mobile multimode, ou à partir d'un dispositif spécifique de collecte d'information dans le réseau.

8. Système d'accès intelligent multimode selon la revendication 7, dans lequel le dispositif d'accès intelligent mobile multimode comprend : un module d'accès, un module de mesure du signal, un module de contrôle de politique d'accès, un module d'inspection approfondie de paquet DPI (Deep Packet Inspection), un module terminal de communication à courte distance, et un module d'intercommunication.

9. Système d'accès intelligent multimode selon la revendication 7, dans lequel lorsqu'il y a une pluralité de dispositifs d'accès intelligents mobiles multimode, la pluralité de dispositifs d'accès intelligents mobiles multimode sont configurés pour communiquer l'un avec l'autre.
